# EUROPEAN PATENT APPLICATION

(11) **EP 3 407 209 A1**
(43) Date of publication of application: **28.11.2018**
(21) Application number: 17172319.0
(22) Date of filing: 22.05.2017
(51) Int. Cl.: G06F 17/30, G06F 17/27

(54) **APPARATUS AND METHOD FOR EXTRACTING AND STORING EVENTS FROM A PLURALITY OF HETEROGENEOUS SOURCES**

(71) Applicant: Fujitsu Limited, Kawasaki-shi, Kanagawa 211-8588 (JP)
(72) Inventor: GARCIA SANTA, Nuria, 28010 Madrid (ES); LLAVES, Alejandro, 28011 Madrid (ES); TORRE, Victor de la, 28007 Madrid (ES)
(74) Representative: Haseltine Lake LLP

(57) **Abstract**

An apparatus, method and program for extracting and storing events from a plurality of heterogeneous sources. The apparatus comprises: an event learner, an event extractor, and a memory, wherein the event learner comprises: an inputter configured to receive sample event patterns; an information retriever configured to retrieve terms information and to identify entities and predicates from the terms information; and a comparator configured to compare the identified entities and predicates against the sample event patterns, to generate a plurality of refined event patterns using the identified entities and predicates and the sample event patterns, and to send the generated plurality of refined event patterns to the memory for storage, wherein the event extractor comprises: a selector configured to select raw information from the plurality of heterogeneous sources; a reformatter configured to identify entities and predicates in the raw information, and to generate reformatted information indicating the entities and predicates; and an analyser configured to analyse the reformatted information using the plurality of refined event patterns stored in the memory and, when an event matching a refined event pattern is identified, to store the event.

## Description

The invention relates to an apparatus and method for extracting and storing events from a plurality of heterogeneous sources. Also disclosed are a computer program which, when executed by a computer, causes the computer to perform the method, and a non-transitory computer readable medium comprising the computer program.

In recent years the amount of data generated and available for analysis in various technological areas has increased rapidly. This is particularly the case since the advent of the Internet, which has both significantly increased the amount of information generated in various technological areas and has also simultaneously increased the availability of information. The increase in the availability of information may be useful when seeking to analyse the trends and processes in technological areas, or make predictions about future trends.

Problems may arise as techniques for obtaining and analysing available information, and in particular for filtering out useful information for a given purpose from the available information, have not matched the pace at which the amount of available information has increased. This may lead to issues whereby it is not possible to extract relevant information from all of the available information in a useful time frame, and consequently it may be difficult to obtain, filter and analyse all or the majority of the useful information.

Some areas in which the problems of filtering useful information from irrelevant information are particularly acute include financial, medical, transport and logistics, and so on. However, equivalent problems may arise in any technological area in which high volumes of data are generated.

With specific reference to financial analyses, it is necessary to take into account the actions of a large number of different entities such as various companies, banks, government regulators, as well as other factors, in order to fully analyse aspects of financial markets or make useful predictions of future trends. The amount of potentially relevant information generated which may influence financial markets may be large, therefore filtering the information may be a difficult task. Also, the data may be generated in a large number of disparate forms. For example, and taking only the forms which are widely used on the internet in relation to financial markets, useful information may be obtained from news reports, RSS feeds, stock trackers, blogs, and so on.

Because of the large volume of information available, and also the disparate nature of the sources of the information, it may be very difficult for a user to keep up with the flow of information provided and extract useful information from the flow in a reasonable time frame. As a consequence of this, a user may elect to monitor a subset of the available data sources (a single blog or a single stock tracker, for example), however this approach may lead to potentially key information not being monitored and therefore being omitted from a subsequent analysis.

For the above reasons, it is desirable to provide a mechanism allowing relevant events to be detected and automatically extracted from a repository of information without requiring ongoing human input. It is further desirable if events relating to particular entities may be specifically identified and stored for further analysis.

Embodiments include an apparatus and a method for extracting and storing events from a plurality of heterogeneous sources, the apparatus comprising: an event learner, an event extractor, and a memory, wherein the event learner comprises: an inputter configured to receive sample event patterns; an information retriever configured to retrieve terms information and to identify entities and predicates from the terms information; and a comparator configured to compare the identified entities and predicates against the sample event patterns, to generate a plurality of refined event patterns using the identified entities and predicates and the sample event patterns, and to send the generated plurality of refined event patterns to the memory for storage, wherein the event extractor comprises: a selector configured to select raw information from the plurality of heterogeneous sources; a reformatter configured to identify entities and predicates in the raw information, and to generate reformatted information indicating the entities and predicates; and an analyser configured to analyse the reformatted information using the plurality of refined event patterns stored in the memory and, when an event matching a refined event pattern is identified, to store the event. The apparatus may improve the efficiency and speed with which events may be extracted and stored.

The plurality of heterogenous sources may be unstructured. The system is configured such that the retrival of information from unstructured sources does not impede the operation of the system. The plurality of unstructured heterogeneous sources may comprise blogs, news reports and rss feeds, as well as other sources.

The apparatus may comprise an event term database, which stores relevant information for the identification of predicates and operates as a glossary of relevant terminology. Use of an internal event term database may improve the efficiency of the system relative to retrieving information from external sources.

The plurality of refined event patterns may comprise an event model, which may be saved and potentially exported if required.

The sample event patterns may be automatically selected, and inputted into apparatus following expert curation. The use of expert curation improves the accuracy of the system.

The comparator may comprise a machine intelligence which is used to generate the plurality of refined event templates. Machine intelligences, particularly neural networks, may be particularly well suited to use in the system due to the capability for training.

The information retriever may be configured to retrieve a confidence score for each identified entity and a significance for each predicate, and the comparator may be configured to utilise the retrieved confidence scores and significances when generating the plurality of refined event patterns. The use of confidence scores and significances provides a particularly accurate means for generating the plurality of refined event patterns.

The method for extracting and storing events from a plurality of heterogeneous sources may be executed using a computer program, which may be stored on a non-transitory computer readable medium. This may provide an efficient means for implementing the invention on suitable equipment.

### Description of Figures

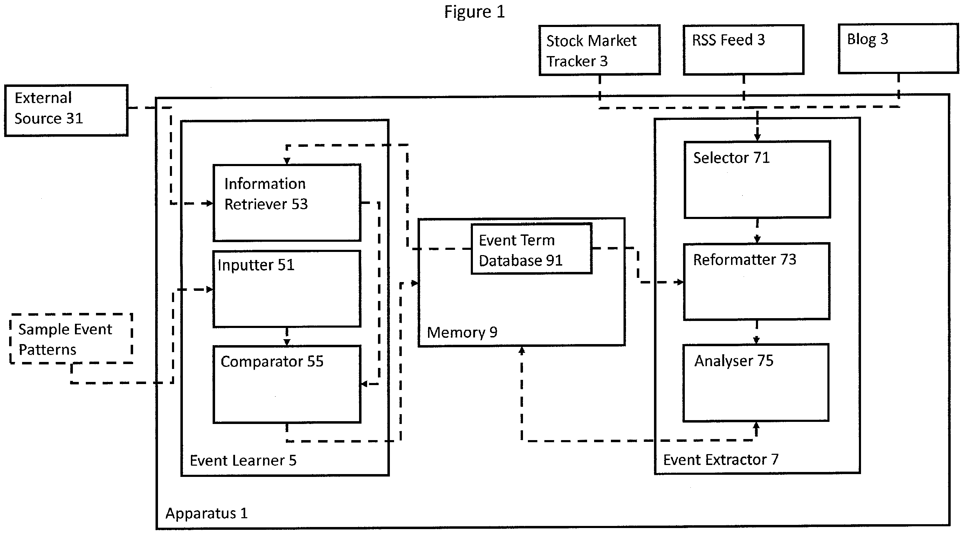

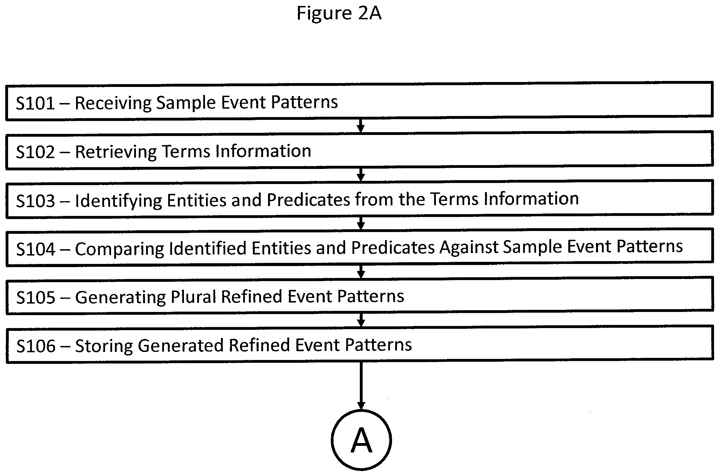

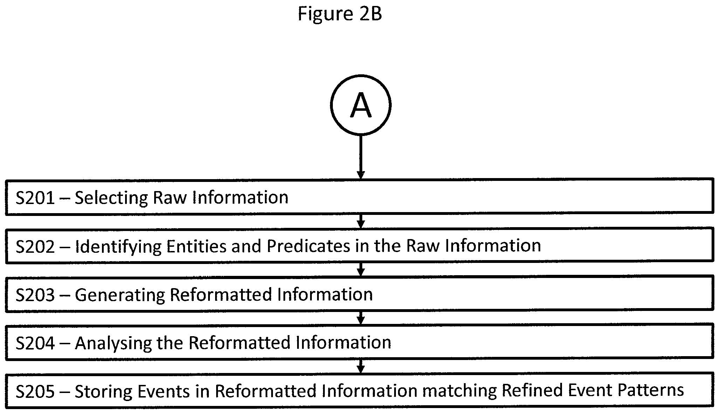

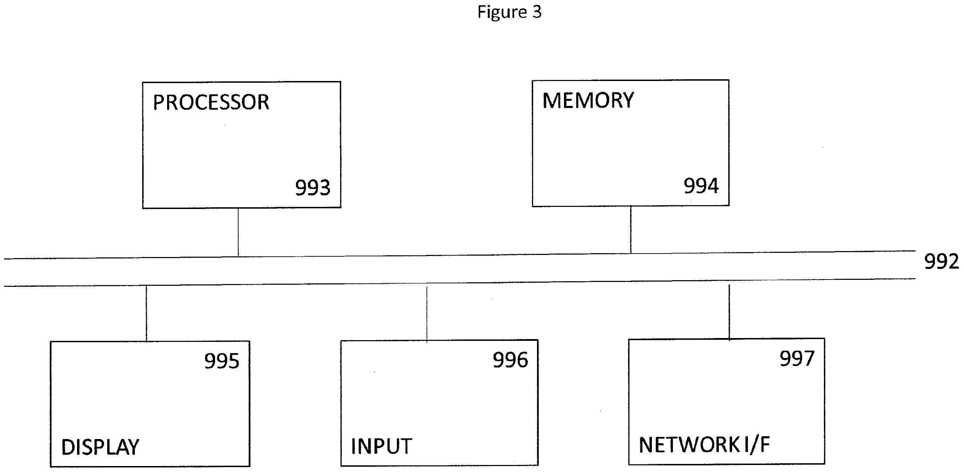

The invention is described, by way of example only, with reference to the following Figures, in which:
. Figure 1 is a schematic diagram of an apparatus in accordance with an embodiment.
. Figure 2A is a flowchart illustrating the initial generation of a plurality of refined event patterns in accordance with an embodiment.
. Figure 2B is a flowchart illustrating the identification of events matching refined event patterns in accordance with an embodiment.
. Figure 3 is a block diagram of a computing device which embodies an embodiment.

### Detailed Description

The nature of the events which are analysed and detected by the system varies between different areas of application. Typically, an event is an occurrence or change of situation which may have ramifications for a given technological area. For example, in the technological area of medical research, an event may relate to the release of a new drug, or to an announcement that a particular drug has been found to cause unwanted side effects. In financial and business related areas, an event may relate to some sort of detectable change in a company, sector or customer behaviour. An example of this may be the release of a new product by a company, or a company completing a merger with another company. Customer specific events may relate to events such as the issuing of a warning of potentially problematic economic circumstances (which may suppress customer spending) or a fluctuation in a currency market.

By analysing the response to particular events in a given area, it may be possible to identify future events following a similar pattern at an earlier stage, and thereby predict future occurrences in the technological area on the basis of early identification of these events. This has clear benefits, for example, in terms of dealing in stocks and shares, allowing a company to predict stock requirements or financial reserves required.

An event pattern is a form of template for ternary information, which maps onto a specific event when generic variables are replaced with specific values. For example, and in a business context, an event pattern may be of the form <unknowncompanyX; sells; unknowncompanyY>. In this event pattern, there are two partially defined entities:
unknowncompanyX and unknowncompanyY. These entities are specified to be of the type "company" but are not limited to a specific company. The two partially defined entities unknowncompanyX and unknowncompanyY may also be referred to as the subject and object respectively. The event pattern also contains an operator (or predicate); in this case "sells". The general form of an event may therefore be abbreviated to <S; P; O>, that is, <Subject; Predicate; Object>. A specific event matching the example event pattern would be of the same general form, but with specific entities in the place of the generic placeholders used above. For example, a specific event matching this event pattern may be of the form <A Ltd.; sells; B Ltd.>. In this event, the subject and object (both entities) are "A Ltd." and "B Ltd." respectively (both defined entities of the type "company"), and the predicate is "sells".

Provided is an apparatus 1 for extracting and storing events from a plurality of heterogeneous sources 3. An example of an embodiment of the apparatus 1 is shown schematically in Figure 1. In figure 1, three heterogeneous sources 3 are shown, however this is for illustrative purposes only and the apparatus 1 may be configured to extract and store events from any number of sources. The apparatus 1 may be configured to receive sample event patterns and to retrieve term information from external sources 31, and/or from an event term database 91. The term information may be analysed to identify entities and predicates within the term information. Based on the identified entities and predicates and analysis of the received sample event patterns, the apparatus 1 may be configured to generate a plurality of refined event patterns. These refined event patterns may relate to specific entities which are of particular interest to a given user (particularly in relation to a given area of interest), and may be tailored so as to be directed to event types the user is particularly interested in.

Obtaining the desired events may be divided into two separate processes: the initial generation of the plurality of refined event patterns as discussed above, and the subsequent analysis of raw information from a plurality of heterogeneous sources 3 utilising the refined event patterns such that events matching the refined event patterns may be identified. These events matching the refined event patterns may then be stored for more detailed analysis, either by a further system or directly by a user. Accordingly, the apparatus 1 may be divided into two primary components: an event learner 5 and an event extractor 7. The event learner 5 is responsible for generating the plurality of refined event patterns, as discussed below with reference to the flowchart in Fig. 2A. The event extractor 7 is responsible for identifying events from the heterogeneous sources 3 that match the refined event patterns, as discussed below with reference to the flowchart in Fig. 2B. The apparatus 1 also comprises a memory 9 for data storage. Where an event term database 91 is used, this may be stored in the memory 9 of the apparatus 1, or elsewhere.

The event learner 5 comprises an inputter 51, an information retriever 53 and a comparator 55. The inputter 51 is configured to receive sample event patterns, as shown in step S101 of Fig. 2A. Typically the sample event patterns are obtained by using a rule-based algorithm to select the patterns from publicly available unstructured texts, such as news websites as are available on the Internet. Established tools such as OpenIE and SyntaxNet may be used in this process. The sample event patterns are typically of the form discussed above, that is, subject; predicate; object. Some examples of sample event patterns are shown below, wherein "S" indicates a subject type, "P" a predicate type and "O" an object type.
- {S=CompanyEntity, P=acquire, O=CompanyEntity} / (S ≠ O)
- {S=CompanyEntity, P=buy, O=CompanyEntity} / (S ≠ O)
- {S=CompanyEntity, P=designate_CEO, O=PersonEntity}
- {S=PersonEntity, P=is_named_CEO, O=CompanyEntity}

The initial sampling may take into account input from existing databases of entity types, which may also associate entities with types and give a confidence score to the association.

The event learner further comprises an information retriever 53 configured to retrieve term information from external sources 31, and to identify entities and predicates using the term information, as shown in steps S102 and S103 of Fig. 2A. It is useful to draw on external sources 31 such as existing databases, because relevant entities will be area of operation specific, and there may be a large number of entities in the area. Examples of entities in financial or business areas could be companies, specific persons, specific products, and so on. In addition to containing the types of various different entities, an external source 31 may also contain confidence scores for the identification of the type. These confidence scores may be established through analysis of existing results. Typically, a higher confidence score would indicate a higher degree of certainty that a given entity had been correctly identified as a particular type. For example, considering the situation where entity A has been identified as a company with a confidence score of 0.5, and entity B has been identified as a company with a confidence score of 0.9, this would indicate that there was a higher degree of certainty that entity B was a company than that entity A was a company. Where a given entity is identified as two different types having two different confidence scores (wherein the two types are not compatible), the type having the higher confidence score is selected as the correct type for the entity.

The apparatus 1 may include an event term database 91, which may be used in the identification of predicates. Alternatively, a source of predicate information that is separate from the apparatus 1 may be used. The event term database 91 operates as a glossary of relevant terminology for a given area, and as such the information contained therein is generally area specific. In addition to identifying relevant predicates, the event term database 91 may be used to identify relationships between predicates (such as equivalence or inverse relationships).

Where an event term database 91 is used, this is used to store predicates related to the events which are processed by the apparatus 1. The event term database 91 may be useful in the generation of the sample event patterns, the generation of the plural refined event patterns and the subsequent identification of relevant events. The schema of the event term database 91 may use the following general form:

```
       Root/Canonical Term
             Synonyms: [
             {label: string, influence: number}, {label: string, influence:
             number}, ...]
             Inverses: [
             {label: string, influence: number}, {label: string, influence:
             number}, ...]
```

The 'Root/Canonical Term' is the main nomenclature to define a set of terms. This root term will have a collection of synonyms with the label/term and the value of the significance (influence) of that term inside that entry of the database. The significance of a given synonym is essentially a measure of the relevance of that synonym within the Root/Canonical term, and is related to the similarity in meaning between the Root/Canonical term and the synonym. That is, the significance is a measure of how often the Root/Canonical term could be replaced with the synonym without altering the meaning of a given event. The same structure may be used to describe the collection of inverse terms/properties. The example below shows an entry within the definition of terms for the financial domain, wherein the Root/Canonical Term is "Acquisition":

```
       Acquisition
             Synonyms: [
             {label:'buy', influence: 0.8}, {label:'acquire', influence: 0.96},
 {label:'purchase', influence: 0.51}, {label:'trade', influence: 0.56},
 {label:'gain', influence: 0.43}, {label:'obtain', influence: 0.72}, ...]
             Inverses: [{label:'sell', influence: 0.8}, {label:'release',
             influence: 0.32}, ...]
```

Where an event term database 91 is used, the predicate information contained therein may be used at several stages of the process for obtaining the desired events, including by the information retriever 53 and by the reformatter 73.

The information obtained by the information retriever 53 may be passed to the inputter 51 for use in selection of the sample event patterns. This may allow the sample events to be selected that are events of some relevance to the technological area under investigation (and contain entities and/or predicates recognised as being present in that technological area).

Once obtained, the sample event patterns may be passed directly to the inputter 51. However, it is possible that in the initial sampling, less relevant event patterns may also be included in the sample event pattern set. As discussed above, the proportion of less relevant event patterns in the sample event pattern set may be reduced by using the information obtained by the information retriever 53 (potentially from the event term database 91) when selecting the sample event patterns. Optionally, to improve the accuracy with which the system identifies matches, the sample event patterns may be curated by one or more experts in the field, such that the most relevant sample event patterns may be identified and then utilised in the further processing of the system. A typical expert curation would require the input from human experts in whatever area the apparatus 1 was to be used to extract events. For financial areas, this could be a financial analyst or a banker. For medical areas, this could be a doctor or drug developer.

The information from the inputter 51 and the information retriever 53 is passed to the comparator 55. The comparator 55 is configured to compare the identified entities and predicates in the sample event patterns, and to generate a plurality of refined event patterns using the identified entities and predicates and the sample event patterns. This is shown in steps S104 and S105 of Fig. 2A. The generated plurality of refined event patterns are then stored in the memory 9, as shown in step S106 of Fig. 2A. Although various different configurations of comparator 55 may be used, typically a machine intelligence is utilised in the comparator 55 to generate the plurality of refined event patterns. This is because machine intelligences are particularly well suited to analysing the disparate information including the sample event patterns which may be provided to the comparator 55 and generating the refined event patterns using this information. An example of the type of machine intelligence which may be utilised in this role is a neural network (such as a convolutional neural network), although alternative techniques utilising conditional random field (CRF) methods may also be used. Essentially, the comparator 55 may apply training techniques, using the machine intelligence if present, to refine the sample event pattern set and produce the plurality of refined event patterns. Collectively, the plurality of refined event patterns may be referred to as an event model.

As an example of the process performed by the inputter 51 and information retriever 53, the example raw information:
"Newspaper Company A Buys Website B. The company also bought Website C, a sister site. Both are product recommendation websites that offer guides on tech gadgets and home products" may be obtained by the inputter 51. From this text, the information retriever 53 could identify entities and predicates as shown in the six extracted information statements below (optionally with reference to the event term database 91 and/or external sources 31):
   1 -{S= Newspaper Company A, P=buy, O=Website B}
   2 -{S= Newspaper Company A, P=buy, O= Website C}
   3 -{S= Website B, P=offer, O=guides on tech gadgets}
   4 -{S= Website C, P=offer, O=guides on tech gadgets}
   5 -{S= Website B, P=offer, O=guides on home products}
   6 -{S= Website C, P=offer, O=guides on home products}
The types of the entities and the root terms of the predicates could then be identified as follows, with reference to the same six statements:
1 -{S=CompanyType:0.94 (confidence); LocationType:0.61, P=Root[Acquisition:0.8]; Root[Merge:0.68], O= CompanyType:0.91}
2 -{S= CompanyType:0.94; LocationType:0.61, P= Root[Acquisition:0.8]; Root[Merge:0.68], O= CompanyType:0.87}
3 -{S= CompanyType:0.91, P= Root[CatalogOffer:0.87], O= ProductType:0.75}
4 -{S= CompanyType:0.87, P= Root[CatalogOffer:0.87], O= ProductType:0.75}
5 -{S= CompanyType:0.91, P= Root[CatalogOffer:0.87], O= ProductType:0.71}
6 -{S= CompanyType:0.87, P= Root[CatalogOffer:0.87], O= ProductType:0.71}.
The resulting information may then be passed to the comparator 55.

The comparator 55 will typically utilise the confidence scores of the entity types if these are available, as well as the significance value of the predicate from the event term database 91, when identifying events. A portion of an example of an algorithm which may be utilised to identify a particular event types is as follows, wherein identification of event types is performed based on identification of a subject and object at a confidence level above a minimum threshold and predicate at a significance level above a minimum threshold.
If(S==CompanyEntity.confidence > 0.8)
If(O==CompanyEntity.confidence > 0.8)
If(P==Dictionary.root[Acquisition] > 0.75)
EventType = Acquisitions
In the above example, the subject and object are both identified as companies with a confidence score above 0.8, and the predicate is identified as being derived from the root term "Acquisition" (that is, including "acquires", "acquired", and so on) with a significance of above 0.75. As a result, the algorithm identifies the event type as an Acquisition.
If(S==CompanyEntity.confidence > 0.8)
If(O==ProductEntity.confidence > 0.8)
If(P==Dictionary.root[Release] > 0.85)
EventType = ProductRelease
In the above example, the subject is identified as a company with a confidence score above 0.8, the object is identified as a product with a confidence score above 0.8, and the predicate is identified as being derived from the root term "Release" with a significance of above 0.85. As a result, the algorithm identifies the event type as a Product Release.

Although alternative techniques may be utilised when the confidence scores or significances are not available, or when it is desired to not utilise the confidence scores or significances, typically techniques utilising the confidence scores and significances provide the most accurate results.

Following the identification of a plurality of refined event patterns, the comparator 55 may optionally be configured to optimise the event list by identifying multiple descriptions of the same fact, that is, events that are equivalent to one another. An example of this (utilising example companies A Ltd. and B Ltd.) would be that the event
<A Ltd.; buys; B Ltd.>
is equivalent to the event
<B Ltd.; is bought by; A Ltd.>
Similarly, the two events:
<A Ltd.; buys; B Ltd.>
and
<A Ltd.; acquires; B Ltd.>
may also be treated as equivalent. Utilising the event term database 91, it is possible to optimise the plurality of refined event patterns by combining the two equivalent event patterns into a single (reconciled) pattern. In the above example, this would be
<A Ltd.; [acquire, buy]; B Ltd.>.

Following the generation (and optional reconciliation) of the refined event patterns, the plurality of refined event patterns (that is, the event model) may then be stored in a memory 9. A portion of an event model is shown in table 1 below.

**Table 1**

| **ProductEnt** | **CompanyEnt** | **PersonEnt** | **LocationEnt** | **Root 1** | **Root 2** | **Root 3** | ... | **EventType** |
|---|---|---|---|---|---|---|---|---|
| | | | | **(ex. Adquisition)** | **(ex. Release** | **(ex. Merge)** | | |
| 0.85 | 0.86 | 0.42 | 0.1 | 0.2 | 0.92 | 0.21 | | ProductRelease |
| 0.3 | 0.98 | 0.3 | 0.0 | 0.9 | 0.15 | 0.84 | | Acquisitions |
| 0.68 | 0.95 | 0.71 | 0.45 | 0.85 | 0.22 | 0.97 | | CompanyMerge |
| ... | ... | ... | ... | ... | ... | ... | | ... |

Table 1 illustrates how different types of event may be identified by provisionally identifying the subject, predicate and object involved in the event. Based on the confidence scores with which the different subjects, predicates and objects are identified, the event may then be determined and given an overall combined confidence score. Taking the example in line 1 of the table, when it is identified that the subject is of the type "company", the predicate is of the type "release" and the object of the type "product", this event may be identified as a "product release" with a high degree of confidence. The refined event patterns are referred to as such because, prior to the storage of these patterns in the memory 9, the machine intelligence aspect of the comparator 55 is used to train the system and identify the desired event patterns, thereby refining the retained event pattern set.

Once the plurality of refined event patterns have been stored in the memory 9, the identification of relevant events by the event extractor 7 may be performed, as illustrated by the flowchart in Fig. 2B.

The event extractor 7 comprises a selector 71, a reformatter 73 and an analyser 75. These components are discussed in turn below. The selector 71 is configured to select raw information from a plurality of heterogeneous sources 3, as shown in step S201 of Fig. 2B. Typically, the heterogeneous sources 3 are unstructured, although the system may also operate using structured information. While the system may operate using structured information, the use of structured information does not make best use of the full capabilities of the system to extract useful information from unprocessed (unstructured) sources 3 which are not specifically intended for use in analyses, such as RSS feeds, news articles, blogs, and so on (as shown in Fig. 1). Unstructured information is information which has not been specifically configured to be inputted into and understood by an automatic system. Typically, unstructured information has instead been written in such a way as to be easily understood by a human reader. When structured information is inputted into the system, this is interpreted by the system in the same way as unstructured information.

In order to allow information to be extracted from these unstructured sources, the selector 71 may utilise known text trawling techniques. Typical sources for the information could include news websites, company web pages, stock market feeds, online shopping sites, and so on. However, rather than simply trawling for information and collecting any information found, the selector 71 is configured to identify information specifically relating to the area of interest. For example, wherein business type events are being analysed, the selector 71 will not collect and retain information relating to sports results.

Once raw information has been selected from the heterogeneous (and potentially unstructured) sources 3, this raw information is then passed to the reformatter 73. The reformatter 73 reformats the information into a typical ternary information form, that is, identifying entities and predicates (or subject predicates and objects), as shown in steps S202 and S203 of Fig. 2B. The sentences below give examples of extracted information, in which the subject, predicate and object have been identified this in a business context is shown below. The information required to identify the entities and predicates may be obtained from the event term database 91 and/or external sources 31 (similar to the process performed by the information retriever 53).
- A Ltd. opens a new division in Madrid
   Subject = A Ltd.
   Predicate = Opens
   Object = Division
- B Ltd. creates a new Al product
   Subject = B Ltd.
   Predicate = Creates
   Object = Al Product

Once the raw information has been analysed as discussed above to identify the entities and predicates, this information is then referred to as reformatted information. The reformatted information is essentially a list of ternary relationships detected in the heterogeneous sources 3. The reformatted information is then passed to the analyser 75.

The analyser 75 is configured to analyse the reformatted information with reference to the plurality of refined event patterns stored in the memory 9, as shown in step S204 of Fig. 2B. In particular, the analyser 75 determines whether or not any of the reformatted information received from the reformatter 73 may be matched against any of the plurality of refined event patterns. When a refined event pattern matches some of the reformatted information, this reformatted information may then be stored as an event instance, as shown in step S205 of Fig. 2B. For example, a refined event pattern stored in the memory 9 may relate to the opening of new divisions by a company, in which case the reformatted information linked to the first example listed above ("A Ltd. opens a new division in Madrid") may be stored. The storage may take place in the same memory 9 as is used to store the refined event patterns, or in a separate memory. When the reformatted information contains additional information (such as the time, date, location, etc. of the event), this information may also be stored in conjunction with the event instance.

In order to make predictions on the basis of the interaction of a plurality of events, it may be helpful to be aware of the timing of these events. As an example of this, it may be possible to predict that the share price of a company would rise following a successful product launch. As such, timing information may be of use in analyses performed using the stored event instances.

In the present invention, an automated system for extracting relevant information in relation to a particular technological area from a plurality of heterogeneous sources 3 is provided. The system allows that a far broader range of sources and types of information may be processed than could be analysed by alternative techniques (such as processing by a human operator). The system therefore allows a database of useful information to be constructed and useful predictions of future occurrences to be made on the basis of the information in this database. Further, as a result the process by which the refined event patterns are obtained, the system not only extracts relevant events more easily and accurately than prior art systems, but may also increase in accuracy with use. This is because the operation of the system may allow the comparator 55 to apply training techniques while processing event patterns to further refine the event patterns, thereby further increasing the accuracy of the results obtained.

Applications of the invention are primarily related to fields wherein a large amount of data is generated at a high rate, such as financial or business fields, or medical fields, however the invention may also be applied to other fields wherein it is necessary to analyse data from heterogeneous (and potentially unstructured) sources 3.

Figure 3 is a block diagram of a computing device, such as a personal computer, which embodies an example, and which may be used to implement an embodiment of the method for extracting and storing events from a plurality of heterogeneous sources 3. The computing device comprises a processor 993, and memory 994. Optionally, the computing device also includes a network interface 997 for communication with other computing devices, or for computing with remote databases.

An example may be composed of a network of such computing devices, such that components of the apparatus 1 are split across a plurality of computing devices. Optionally, the computing device also includes one or more input mechanisms such as keyboard and mouse or touchscreen interface 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. The memory 994 may be the same memory 9 as may be used for the storage of the event term database 91, or a separate memory. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices). In particular, the computer readable medium may comprise a computer program which, when executed on a computer, causes the computer to perform a method for extracting and storing events as discussed above.

The processor 993 is configured to control the computing device and execute processing operations, for example executing code stored in the memory to implement the various different functions of the inputter 51, information retriever 53, comparator 55, selector 71, reformatter 73 and analyser 75 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The display unit may also comprise a touchscreen interface. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. The network interface may also be used in receiving sample event patterns, retrieving terms information, sending generated refined event patterns, selecting raw information and storing events.

Other peripheral devices such as microphone, speakers, printer, power supply unit, fan, case, scanner, trackerball etc. may be included in the computing device.

The inputter 51 of Figure 1 may be a processor 993 (or plurality thereof) executing processing instructions (a program) stored on a memory 994 and exchanging data via a network I/F 997 or bus 992. In particular, the processor 993 may execute processing instructions to receive sample event patterns as discussed above. Furthermore, the processor 993 may execute processing instructions to send the sample event patterns to other components within the apparatus 1, such as the comparator 55.

The information retriever 53 of Figure 1 may be a processor 993 (or plurality thereof) executing processing instructions (a program) stored on a memory 994 and exchanging data via a network I/F 997 or bus 992. In particular, the processor 993 may execute processing instructions to retrieve terms information and to identify entities and predicates from the terms information, as discussed above. Furthermore, the processor 993 may execute processing instructions to store the retrieved terms information on a connected storage unit and/or to transmit, via the network I/F 997 or bus 992, the information to other components within the apparatus 1, such as the comparator 55.

The comparator 55 of Figure 1 may be a processor 993 (or plurality thereof) executing processing instructions (a program) stored on a memory 994 and exchanging data via a network I/F 997 or bus 992. In particular, the processor 993 may execute processing instructions to compare the identified entities and predicates against the sample event patterns and to generate a plurality of refined event patterns using the identified entities and predicates and the sample event patterns, as discussed above. The processor 993 may also execute processing instructions to send the generated plurality of refined event patterns to the memory for storage, which may be the memory 994, the memory 9 or another memory. Furthermore, the processor 993 may execute processing instructions to transmit, via the network I/F 997 or bus 992, the refined event patterns to other components within the apparatus 1 or elsewhere.

The selector 71 of Figure 1 may be a processor 993 (or plurality thereof) executing processing instructions (a program) stored on a memory 994 and exchanging data via a network I/F 997 or bus 992. In particular, the processor 993 may execute processing instructions to select raw information from the plurality of heterogeneous sources 3, as discussed above. Furthermore, the processor 993 may execute processing instructions to store the received raw information on a connected storage unit and/or to transmit, via the network I/F 997 or bus 992, the raw information to other components within the apparatus 1, such as the reformatter 73.

The reformatter 73 of Figure 1 may be a processor 993 (or plurality thereof) executing processing instructions (a program) stored on a memory 994 and exchanging data via a network I/F 997 or bus 992. In particular, the processor 993 may execute processing instructions to identify entities and predicates in the raw information, and to generate reformatted information indicating the entities and predicates as discussed above. Furthermore, the processor 993 may execute processing instructions to store the identified entities and predicates on a connected storage unit and/or to transmit, via the network I/F 997 or bus 992, the analysis results to other components within the apparatus 1, such as the analyser 75.

The analyser 75 of Figure 1 may be a processor 993 (or plurality thereof) executing processing instructions (a program) stored on a memory 994 and exchanging data via a network I/F 997 or bus 992. In particular, the processor 993 may execute processing instructions to analyse the reformatted information using the plurality of refined event patterns stored in the memory, as discussed above. Furthermore, the processor 993 may execute processing instructions to, when an event matching a refined event pattern is identified, store the event in the memory on a connected storage unit and/or to transmit, via the network I/F 997 or bus 992, the event to other components within the apparatus 1 or elsewhere.

Exemplary methods may be carried out on one or more computing devices such as that illustrated in Figure 3. Such a computing device need not have every component illustrated in Figure 3, and may be composed of a subset of those components. A method may be carried out by a single computing device in communication with one or more data storage servers via a network, as discussed above. The scope of the invention is defined by the claims.

## Claims

1. An apparatus for extracting and storing events from a plurality of heterogeneous sources, the apparatus comprising: an event learner, an event extractor, and a memory,
wherein the event learner comprises:
an inputter configured to receive sample event patterns;
an information retriever configured to retrieve terms information and to identify entities and predicates from the terms information; and
a comparator configured to compare the identified entities and predicates against the sample event patterns, to generate a plurality of refined event patterns using the identified entities and predicates and the sample event patterns, and to send the generated plurality of refined event patterns to the memory for storage,
wherein the event extractor comprises:
a selector configured to select raw information from the plurality of heterogeneous sources;
a reformatter configured to identify entities and predicates in the raw information, and to generate reformatted information indicating the entities and predicates; and
an analyser configured to analyse the reformatted information using the plurality of refined event patterns stored in the memory and, when an event matching a refined event pattern is identified, to store the event.

2. The apparatus of claim 1, wherein the plurality of heterogeneous sources are unstructured.

3. The apparatus of claim 2, wherein the plurality of unstructured heterogeneous sources comprise blogs, news reports and rss feeds.

4. The apparatus of any preceding claim, wherein the apparatus comprises an event term database.

5. The apparatus of any preceding claim, wherein the plurality of refined event patterns comprise an event model.

6. The apparatus of any preceding claim, wherein the sample event patterns are automatically selected, and inputted into apparatus following expert curation.

7. The apparatus of any preceding claim, wherein the comparator comprises a machine intelligence which is used to generate the plurality of refined event templates.

8. The apparatus of claim 7, wherein the machine intelligence is based on a neural network.

9. The apparatus of any preceding claim, wherein the information retriever is configured to retrieve a confidence score for each identified entity and a significance for each predicate, and the comparator is configured to utilise the retrieved confidence scores and significances when generating the plurality of refined event patterns.

10. A method for extracting and storing events from a plurality of heterogeneous sources, the method comprising:
receiving sample event patterns;
retrieving terms information;
identifying entities and predicates from the terms information;
comparing the identified entities and predicates against the sample event patterns;
generating a plurality of refined event patterns based on the comparison between the identified entities and predicates and the sample event patterns;
storing the generated plurality of refined event patterns in a memory;
selecting raw information from the plurality of heterogeneous sources;
identifying entities and predicates in the raw information;
generating reformatted information, indicating the entities and predicates, from the raw information; and
analysing the reformatted information using the plurality of refined event patterns stored in the memory to identify events in the reformatted information,
wherein, when an event matching a refined event pattern is identified, the event is stored.

11. A computer program which, when executed on a computer, causes the computer to perform a method for extracting and storing events in accordance with claim 10.

12. A non-transitory computer readable medium comprising a computer program in accordance with claim 11.
